Europäisches Patentamt

European Patent Office

Office européen des brevets

(11) Veröffentlichungsnummer: **0 048 390**

**A1**

(12) # EUROPÄISCHE PATENTANMELDUNG

(21) Anmeldenummer: 81107080.4

(22) Anmeldetag: 09.09.81

(51) Int. Cl.³: **C 08 L 25/00**
**C 08 L 71/04**

(30) Priorität: 20.09.80 DE 3035551

(43) Veröffentlichungstag der Anmeldung:
31.03.82 Patentblatt 82/13

(84) Benannte Vertragsstaaten:
BE DE FR GB IT NL

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: Echte, Adolf, Dr.
Leuschnerstrasse 42
D-6700 Ludwigshafen(DE)

(72) Erfinder: Gausepohl, Hermann, Dr.
Neuweg 10
D-6704 Mutterstadt(DE)

(72) Erfinder: Heckmann, Walter, Dr.
Geiersbergstrasse 2
D-6940 Weinheim(DE)

(72) Erfinder: Naarmann, Herbert, Dr.
Haardtblick 15
D-6719 Wattenheim(DE)

(54) **Thermoplastische Formmassen.**

(57) Thermoplastische Formmassen auf der Grundlage von schlagfest modifizierten Styrolpolymerisaten und Polyphenylenäther, wobei die Teilchen der Weichkomponente des schlagfest modifizierten Styrolpolymerisates eine Knäuelmorphologie haben.

FIG.1

EP 0 048 390 A1

BASF Aktiengesellschaft                    O.Z. 0050/034673

Thermoplastische Formmassen

Die Erfindung betrifft thermoplastische Formmassen auf der Grundlage von schlagfest modifizierten Styrolpolymerisaten und Polyphenylenäthern.

Thermoplastische Massen, die sich zur Herstellung von Formteilen eignen und die schlagzäh modifizierte Styrolpolymerisate und Polyphenylenäther enthalten sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenäthern abgemischt sind, durch eine bessere Wärmeformbeständigkeit auszeichnen. Die Materialeigenschaften derartiger Formmassen sind im allgemeinen zufriedenstellend, doch hat es sich gezeigt, daß Formteile eine mitunter nicht ausreichende Schlagzähigkeit haben.

Der vorliegenden Erfindung lag daher die Aufgabe zugrunde, thermoplastische Formmassen auf der Grundlage von schlag-fest modifizierten Styrolpolymerisaten und Polyphenylen-äthern zu schaffen, die zu Formteilen mit einer verbesserten Schlagzähigkeit verarbeitet werden können.

Diese Aufgabe wird erfindungsgemäß gelöst durch Formmassen, bei denen die Teilchen der Weichkomponente des schlagfest modifizierten Styrolpolymerisates eine Knäuelmorphologie haben.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder vG/P durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, daß die obengenannte Knäuelmorphologie der Teilchen eintritt. Die Maßnahmen hierfür sind bekannt. Sie sind beispielsweise in der Veröffentlichung von A.Echte in der Zeitschrift Angewandte Makromolekulare Chemie, Band 58/59 (1977) auf den Seiten 175 bis 198 beschrieben.

Unter Knäuelteilchen versteht man Teilchen, deren Einschlüsse aus Matrixmaterial entweder langgestreckt oder flächig oder in Form von Schalen aufgebaut sind. Das Matrixmaterial ist das Material, das die Teilchen umgibt. Im Falle von schlagzähem Polystyrol besteht es aus Polystyrol. Das Matrixmaterial bildet also im Teilchen ein das Teilchen interpenetrierendes Netzwerk. Im Falle der langgestreckten Einschlüsse ist eine Längendimension mindestens 3 mal größer als die beiden anderen Raumdimensionen. Der stabförmige Einschluß ist in der Regel noch unregelmäßig im Durchmesser geformt und ungleichförmig räumlich verworfen.

Im zweiten Falle sind die flächigen Einschlüsse aus Matrixmaterial in zwei Raumdimensionen mindestens 3 mal größer als in der dritten Raumdimension. Auch hier kann die Stärke der Schichten unregelmäßig sein. In der Regel sind die Schichten räumlich unregelmäßig gekrümmt. Ein Spezialfall sind konzentrische Schalen.

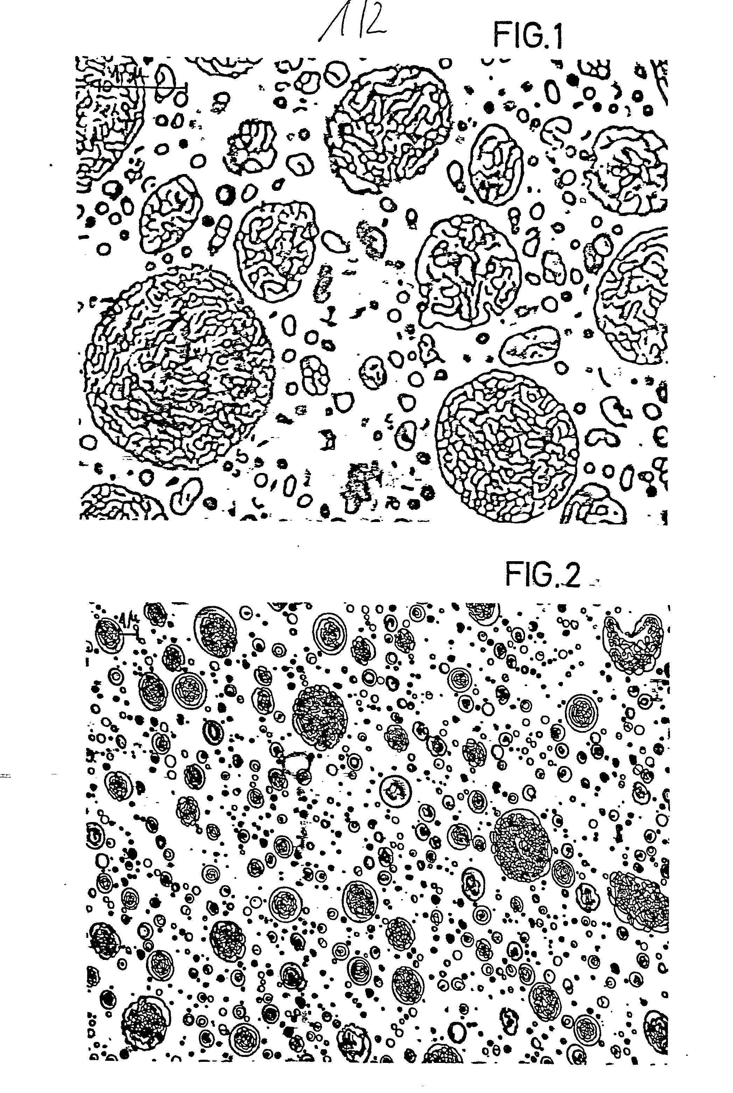

Die Obergrenze der Dimension der langgestreckten oder flächigen Einschlüsse wird durch die Abmessung des Teilchens bestimmt. Knäuelteilchen sind beispielhaft in den Figuren 1, 2 und 3 wiedergegeben.

0048390

So kann man beispielsweise Knäuelteilchen, also Weichkomponententeilchen mit langgestreckten oder flächigen Hartkomponenteneinschlüssen, erhalten, wenn man bei der Masse-Suspensionspolymerisation ein Blockcopolymerisat aus Butadien und Styrol einsetzt, das 10 Gew.% Polystyrol im Block enthält.

Besonders geeignet sind solche thermoplastischen Formmassen, in denen die Teilchen einen mittleren Teilchendurchmesser von 0,5 bis 3 µm (Mikron) haben.

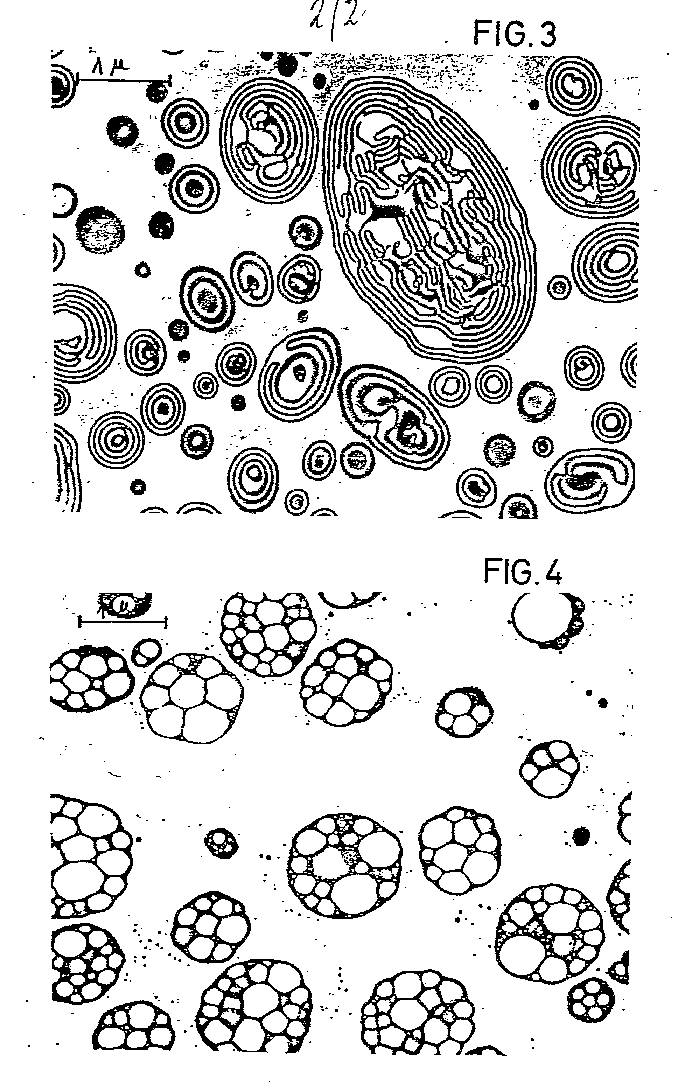

Nach dem Stand der Technik enthalten bekannte Formmassen aus Styrolpolymerisaten und Polyphenylenäthern Weichkomponententeilchen mit Zellenstruktur. Solche Zellenteilchen bestehen aus einer Kautschukhülle mit mehreren eingelagerten, sphärischen Einschlüssen aus der umgebenden Matrix. Zellenteilchen sind in Figur 4) wiedergegeben.

Die thermoplastischen Formmassen können schlagfest modifizierte Styrolpolymerisate und Polyphenylenäthern in beliebigen Mengen, beispielsweise in Mengen von 5 bis 90 Gew.-% Styrolpolymerisat und 95 bis 10 Gew.-% Polyphenylenäther enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenäther enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der

US-PS 2 862 906 beschrieben sind. Selbstverständlich sind auch andere Verfahren anwendbar, sofern die obengenannte Teilchenmorphologie eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 98 liegt.

Die Herstellung der schlagfest modifizierten Polymerisate mit dem erfindungsgemäßen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol, die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 30 % in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-diisobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. von Bariumsulfat. Die Suspendiermittel werden im allgemeinen in Mengen von 0,1 bis 5 Gew.-%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muß dabei mindestens im ersten Abschnitt der Polymerisation, d.h. bis zu Umsätzen der monovinylaromatischen Verbindungen gleich oder kleiner 45 Gew.-% gut gerührt werden. All diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906, auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (siehe z.B. Freeguard, Brit. Polym. J. 6 (1974) S. 203 bis 228; Wagner, Robeson, Rubber Chem. Techn. 43 (1970), 1129 ff).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß zu etwa 50 bis 60 Gew.-% gegeben. Für die erfindungsgemäßen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizier-

0048390

ten Polymerisats beträgt dann im allgemeinen zwischen 2 und 20 Gew.-%, vorzugsweise von 5 bis 15 Gew.-%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk--Teilchen partiell vernetzt und in mehr oder weniger starkem Maße während der Polymerisation durch die monovinylaromatischen Verbindungen gepfropft worden sind.

Die Bestimmung der mittleren Teilchengröße der dispersen Weichkomponente kann z.B. durch Auszählung und Auswertung elektronenmikroskopischer Dünnschichtaufnahmen der schlagfest modifizierten Polymerisation erfolgen (verg. F.Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 45 %. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z.B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen
und Mitteln der zur gleichen Größenklasse (konst. Interwallbreite) gehörigen Teilchen aus elektronenmikroskopischen Dünnschichtaufnahmen. Mit den Volumina der Teilchen
(3. Potenz des scheinbaren Durchmessers) innerhalb der
Intervalle wird die Verteilungssummenkurve bestimmt. Beim
50 %-Ordinatenwert kann auf der Abszisse der Äquivalentdurchmesser dann abgegriffen werden. Die angegebenen
mittleren Durchmesser stellen dabei einen Mittelwert von
mindestens 5000 Teilchen dar.

Das Vorliegen der Knäuelstruktur wird durch Auswerten
elektronenmikroskopischer Dünnschichtaufnahmen der schlagfest modizifierten Polymerisate festgestellt.

Bei den Polyäthern handelt es sich um Verbindungen auf der
Basis von in ortho-Position disubstituierten Polyphenylenoxiden, wobei der Äthersauerstoff der einen Einheit an den
Benzolkern der benachbarten Einheit gebunden ist. Dabei
sollen mindestens 50 Einheiten miteinander verknüpft sein.
Die Polyäther können in ortho-Stellung zum Sauerstoff
Wasserstoff, Halogen, Kohlenwasserstoffe, die kein $\alpha$-stän-
diges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-
äther, Poly(2,6-diphenyl-1,4-phenylen)äther, Poly(2,6-di-
methoxy-1,4-phenylen)äther, Poly(2,6-dimethyl-1,4-phenylen)äther, Poly(2,6-dibrom-1,4-phenylen)äther. Bevorzugterweise wird der Poly(2,6-dimethyl-1,4-phenylen)äther eingesetzt. Besonders bevorzugt werden Poly-(2,6-dimethyl-1,4--phenylen)äther mit einer Grenzviskosität zwischen 0,45 und 0,65 dl/g (gemessen in Chloroform bei 30°C).

Die Polyphenylenäther können z.B. in Gegenwart von komplexbildenden Mitteln wie Kupferbromid und sek. Dibutylamin aus den Phenolen hergestellt werden.

Die Mischungen aus den schlagzäh modifizierten Styrolpolymerisaten und Polyphenylenäthern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Neben der hohen Schlagzähigkeit haben die Formmassen weitere gute Eigenschaften, wie hohe Wärmeformbeständigkeit und gute Verarbeitungseigenschaften.

Beispiele und Vergleichsversuche

Die Mischung aus 112 g Medium-cis-Kautschuk mit einer Lösungsviskosität von 170 mPa.s (5%ig in Toluol bei 25°C), 1283 g Styrol, 2,8 g tert.-Butylperbenzoat und 1,5 g tert.-Dodecylmerkaptan wurde kontinuierlich in einem Reaktionsturm bei 130°C unter Rühren bis zu einem Feststoffgehalt von 30 Gew.% in Masse polymerisiert. Der Ansatz wurde in wäßriger Suspension auspolymerisiert. Die Viskositätszahl der Polystyrol-Matrix betrug 69,3 cm$^3$/g (Toluol, 25°C). Die Teilchen haben Knäuelstruktur entsprechend Figur 1.

In einem 5 l-Rührkessel mit Ankerrührer wurde eine Lösung bestehend aus

1.380 g Styrol

120 g Butadien-Styrol-Blockcopolymerisat mit einem Styrolgehalt von 10 Gew.% und einem Molekulargewicht von 80 bis 100 000

1,4 g t-Dodecylmercaptan

1,4 g Dicumylperoxid

bei 125°C Innentemperatur und einer Rührerdrehzahl von 200 Upm bis zu einem Feststoffgehalt von 30 Gew.% vorpolymerisiert.

Anschließend wurden 1.800 ml Wasser, die 9,0 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von jeweils 4 Stunden bei 120°C, bzw. 130°C und 6 Stunden bei 140°C wurde bis zu einem Styrolumsatz >99 % auspolymerisiert. Die Weichkomponententeilchen besaßen eine mittlere Teilchengröße von ca. 1 µm. Die Teilchen haben Knäuelstruktur entsprechend Figur 2.

Um zu einer mittleren Teilchengröße von ca. 0,5 µm zu gelangen, wurde bei der Vorpolymerisation mit Rührerdrehzahl von 350 Upm polymerisiert (Struktur gemäß Figur 2).

1000 g eines Butadien-Styrol-Butadien-Dreiblockcopolymeren mit 66 Gew.% Butadien und einer Viskositätszahl von 304 $cm^3$/g (Toluol, 25°C) wurden mit 11 g tert.-Dodecylmerkaptan, 11 g Dicumylperoxid und 275 g Mineralöl in 9700 g Styrol gelöst und bis zu einem Feststoffgehalt von 44 Gew.% unter Rühren in Masse polymerisiert.

Der Ansatz wurde in wäßriger Suspension auspolymerisiert. Die Viskositätszahl der Polystyrol-Matrix betrug 70,8 $cm^3$/g (Toluol, 25°C).

Die Teilchen haben eine Knäuelstruktur gemäß Figur 3.

Zellenteilchen entsprechend Figur 4) mit einem mittleren Teilchendurchmesser von 1 /um erhält man nach folgender Rezeptur:

In einer 2-Kessel-2-Turmkaskade wurde eine Mischung von 7,2 Gew.Teile eines Polybutadiens mit einem cis-Anteil von 98 %, zusammen mit 85,7 Gew.Teilen Styrol, 6 Gew.Teilen Äthylbenzol und 0,1 Gew.Teilen Octadecyl-3-(3',5'-di--tert.-butyl-4'-hydroxiphenyl)-propionat thermisch polymerisiert. Der Durchsatz betrug 4 l/Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.% tert.-Dodecylmercatan, bezogen auf Styrol, kontinuierlich zudosiert. Die Polymerisatmischung wurde nach der Polymerisation in einer Entgasungszone bei 220 bis 240°C vom Lösungsmittel und Restmonomeren befreit.

| Ort | Rührgeschwindigkeit [Upm] | Temp. [°C] | Umsatz (Integral) |
|---|---|---|---|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | – | 250 | – |

Zellenteilchen mit einer mittleren Teilchengröße von 2 bis 3 /um erhält man nach folgendem Verfahren:

In einem 4 1-Rührkessel mit Blattrührer wurde eine Lösung bestehend aus

1283 g Styrol

112 g Polybutadien (1,2-Vinylgehalt ca. 9 Gew.%)

1,5 g t-Dodecylmercaptan

1,5 g Octadecyl-3(3',5'-di-tert.-butyl-4'-hydroxi-phenyl)-propionat

1,5 g Dicumylperoxid

bei 110°C Innentemperatur und einer Rührerdrehzahl von 300 Upm bis zu einem Feststoffgehalt von 25,4 Gew.% vorpolymerisiert. Anschließend wurden 1800 ml Wasser, die 9 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 3 Stunden bei 110°C, 3 Stunden bei 120°C und 4 Stunden bei 140°C wurde bis zu einem Styrolumsatz $> 99$ % auspolymerisiert.

Zum Vergleich werden Mischungen aus schlagzähem Polystyrol, dessen Teilchen Zellenstruktur haben, geprüft.

Die in der Tabelle angegebenen Gewichtsteile schlagfest modifizierten Polystyrol und von Poly(2,6-dimethyl-1,4-phenylen)äther wurden mit jeweils 0,8 Gew.-Teilen Tris(nonylphenyl)phosphit und 1,5 Gew.-Teilen Polyäthylen auf einem 2-Wellen-Extruder bei 280°C geschmolzen, homogenisiert, gemischt und granuliert. Das Poly(2,6-dimethyl-1,4-phenylen)äther hatte eine Grenzviskosität von 0,48 dl/g.

Aus den Mischungen wurden mittels einer Spritzgußmaschine bei 280°C Prüfkörper hergestellt.

Die Kerbschlagzähigkeit der Formmassen wurde nach DIN 53 453 an gespritzten Normkleinstäben bei 23°C ermittelt.

Die Ergebnisse sind in der Tabelle zusammengefaßt:

Tabelle

| Beispiele | Schlagfestes Polystyrol Morphologie | Schlagfestes Polystyrol [Gew.-Tle] | mittlere Teilchengröße [μm] | Poly(2,6-dimethyl-1,4-phenylen)äther [Gew.-Tle] | Kerbschlagzähigkeit [kJ/m²] bei 23°C |
|---|---|---|---|---|---|
| (erfindungsgemäß) | Knäuelteilchen | | | | |
| 1 | Figur 1 | 75 | 1 | 25 | 10 |
| 2 | Figur 2 | 65 | 1 | 35 | 13 |
| 3 | Figur 3 | 55 | 1 | 45 | 15 |
| 4 | Figur 2 | 75 | 0,5 | 25 | 11 |
| Vergleichsversuche | Zellenteilchen | | | | |
| A | Figur 4 | 75 | 2-3 | 25 | 3 |
| B | Figur 4 | 75 | 1 | 25 | 5 |
| C | Figur 4 | 65 | 1 | 35 | 6 |

Patentansprüche

1. Thermoplastische Formmassen auf der Grundlage von schlagfest modifizierten Styrolpolymerisaten und Polyphenylenäthern, dadurch gekennzeichnet, daß die Teilchen der Weichkomponente des schlagfest modifizierten Styrolpolymerisates eine Knäuelmorphologie haben.

2. Thermoplastische Formmassen nach Anspruch 1, dadurch gekennzeichnet, daß die Teilchen der Weichkomponente einen mittleren Teilchendurchmesser von 0,5 bis 3 Mikron haben.

3. Thermoplastische Formmassen nach Anspruch 1 und 2, dadurch gekennzeichnet, daß der Weichkomponentengehalt des schlagfest modifizierten Styrolpolymerisates im Bereich von 25 bis 50 Gew.% liegt.

Zeichn.

FIG.1

FIG.2

0048390

0050 / 034 673

FIG.3

FIG.4

**Europäisches Patentamt**

## EUROPÄISCHER RECHERCHENBERICHT

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| | FR - A - 2 134 399 (GENERAL ELEC-TRIC)   * Ansprüche * | 1-3 |
| | -- | |
| | FR - A - 2 197 042 (GENERAL ELEC-TRIC)   * Ansprüche * | 1-3 |
| | -- | |
| | FR - A - 2 337 173 (MONSANTO)   * Ansprüche * | 1-3 |
| | -- | |
| | FR - A - 2 162 154 (GENERAL ELEC-TRIC)   * Ansprüche * | 1-3 |
| | -- | |
| | FR - A - 2 212 378 (GENERAL ELEC-TRIC)   * Ansprüche * | 1-3 |
| | -- | |
| | FR - A - 2 090 643 (GENERAL ELEC-TRIC)   * Ansprüche * | 1-3 |
| | ---- | |

**KLASSIFIKATION DER ANMELDUNG (Int. Cl.³)**

C 08 L 25/00
        71/04

**RECHERCHIERTE SACHGEBIETE (Int. Cl.³)**

C 08 L   71/04
        51/04
C 08 F 279/02
        287/00
        291/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie, übereinstimmendes
   Dokument

Der vorliegende Recherchenbericht wurde für alle Patentansprüche erstellt.

| Recherchenort | Abschlußdatum der Recherche | Prüfer |
|---|---|---|
| Den Haag | 05-01-1982 | FOUQUIER |

EPA form 1503.1  06.78